Europäisches Patentamt

European Patent Office

Office européen des brevets

(11) Veröffentlichungsnummer: **0 443 417 A1**

# (12) EUROPÄISCHE PATENTANMELDUNG

(21) Anmeldenummer: 91101964.4

(22) Anmeldetag: 13.02.91

(51) Int. Cl.⁵: **F16L 47/00**

(30) Priorität: 21.02.90 DE 4005367

(43) Veröffentlichungstag der Anmeldung:
28.08.91 Patentblatt 91/35

(84) Benannte Vertragsstaaten:
AT BE CH DE DK ES FR GB GR IT LI LU NL SE

(71) Anmelder: WAVIN B.V.
Händellaan 251
NL-8031 EM Zwolle(NL)

(72) Erfinder: Köstring, Volker
Farnweg 7
W-4477 Twist(DE)
Erfinder: Fehrmann, Heinz
Osterescherfleer 17
W-4472 Haren 1(DE)

(74) Vertreter: Busse & Busse Patentanwälte
Postfach 1226 Grosshandelsring 6
W-4500 Osnabrück(DE)

(54) **Anbohrschelle aus Kunststoff.**

(57) Es ist eine Anbohrschelle (1) aus Kunststoff beschrieben, deren beide Halbschalen (2,3) mit einem normalerweise im wesentlichen waagerecht verlegten Hauptrohr (4) verbunden werden. Die obere Halbschale (3) umfaßt einen senkrecht zur Längsachse des Hauptrohrs (4) ausgerichteten Aufnahmestutzen (6) mit einem Bohrer (7) zum Ausschneiden einer Öffnung im Hauptrohr (4), einen rechtwinklig zum Bohrer-Aufnahmestutzen (6) ausgerichteten Anschlußstutzen für eine Abzweigleitung oberhalb der aus dem Hauptrohr (4) ausgeschnittenen Öffnung und einen weiteren Aufnahmestutzen (17) mit einem in diesem längsbeweglich geführten Absperrschieber (18). Der Absperrschieber (18) besitzt eine mit dem Abzweig-Anschlußstutzen (16) fluchtende axiale Ausrichtung und kann aus einer Ruhestellung innerhalb seines Aufnahmestutzens (17) mit einem abdichtenden inneren Endbereich in eine Absperrstellung (18') innerhalb des Abzweig-Anschlußstutzens (16) bewegt werden.

Fig. 1

Die Erfindung betrifft eine Anbohrschelle aus Kunststoff gemäß dem Oberbegriff des Patentanspruchs 1.

Derartige Anbohrschellen aus Kunststoff sind in zahlreichen Ausführungsformen bekannt und finden zum nachträglichen Anbohren der bereits verlegten Hauptleitung zur Herstellung von Hausanschlüssen oder dgl. Anwendung, wobei nach dem Ausschneiden einer Öffnung im Hauptrohr mittels des in seinem Aufnahmestutzen längsbeweglich geführten Bohrers eine Abzweigleitung an den hierzu vorgesehenen Anschlußstutzen der Anbohrschelle angeschlossen wird.

Der Erfindung liegt die Aufgabe zugrunde, eine Anbohrschelle aus Kunststoff der angegebenen Art zu schaffen, die es mit Hilfe einer in die Anbohrschelle integrierten Zusatzeinrichtung ermöglicht, auf einfache Weise die Abzweigleitung gegenüber dem in der Hauptleitung geführten Medium wie Gas oder Wasser abzusperren und wieder zu öffnen.

Diese Aufgabe wird nach der Erfindung durch eine Ausgestaltung der Anbohrschelle gemäß dem Patentanspruch 1 gelöst. Bei dieser Ausgestaltung kann der Absperrschieber von der Straßenoberseite bzw. der Straßenkappe aus mittels eines geeigneten Betätigungsorgans durch eine einfache lineare Bewegung aus seiner Ruhestellung innerhalb seines Aufnahmestutzens in seine Absperrstellung bewegt werden, in der sein innerer Endbereich mit dem Abzweig-Anschlußstutzen in Dichtungseingriff steht. Dabei erstreckt sich das Betätigungsorgan für seinen Eingriff mit dem Absperrschieber vorzugsweise durch einen Haltestutzen hindurch, der an den Schieber-Aufnahmestutzen zur Straßenoberseite hin angeformt ist und in für seine Betätigung besonders vorteilhafter Weise auf dem Scheitel des Schieber-Aufnahmestutzens angeordnet ist, ähnlich, wie es bei dem Bohrer-Aufnahmestutzen der Fall ist, der seinerseits eine Ausrichtung besitzt, die senkrecht auf den Rohrscheitel des Hauptrohrs gerichtet ist.

Die obere Halbschale der erfindungsgemäßen Anbohrschelle ist mit ihren verschiedenen Aufnahme- bzw. Haltestutzen und dem Abzweig-Anschlußstutzen von einem einstückigen Formkörper aus einem geeigneten thermoplastischen Kunststoff wie Polyvinylchlorid oder Polyethylen und dgl. Polyolefinen z.B. nach dem Spritzgießverfahren gebildet, wobei die äußeren Enden der Aufnahme- bzw. Haltestutzen ihrerseits von geeigneten Endverschlüssen aus Kunststoff insbesondere in Kappenform abgedeckt und dicht verschlossen sind, so daß insgesamt bei der erfindungsgemäßen Anbohrschelle, deren untere Halbschale ebenfalls aus einen Kunststoffteil besteht, im Einbauzustand keine zum Erdreich freiliegenden inneren Metallteile vorhanden sind, die die Ursache für Korrosionsschäden bilden können.

Weitere Merkmale und Vorteile der Erfindung ergeben sich aus den Ansprüchen und der nachstehenden Beschreibung in Verbindung mit der Zeichnung, in der zwei Ausführungsbeispiele des Gegenstands der Erfindung veranschaulicht sind. In der Zeichnung zeigen:

Fig. 1    einen Querschnitt durch ein ein Strömungsmedium wie Gas oder Wasser führendes Hauptrohr und eine an diesem befestigte Anbohrschelle nach der Erfindung,

Fig. 2    eine Draufsicht auf die Anbohrschelle gemäß Fig. 1,

Fig. 3    eine Draufsicht entsprechend Fig. 2 zur Veranschaulichung einer abgewandelten Ausführungsform der Anbohrschelle nach der Erfindung,

Fig. 4    einen Schnitt nach der Linie IV-IV der Fig. 1 und

Fig. 5    einen Schnitt nach der Linie V-V der Fig. 3.

In der Zeichnung ist eine als Ganzes mit 1 bezeichnete Anbohrschelle aus Kunststoff mit einer unteren Halbschale 2 und einer oberen Halbschale 3 dargestellt. Sowohl die Halbschale 2 als auch die Halbschale 3 ist jeweils von einem einstückigen Formkörper aus einem geeigneten Kunststoff gebildet.

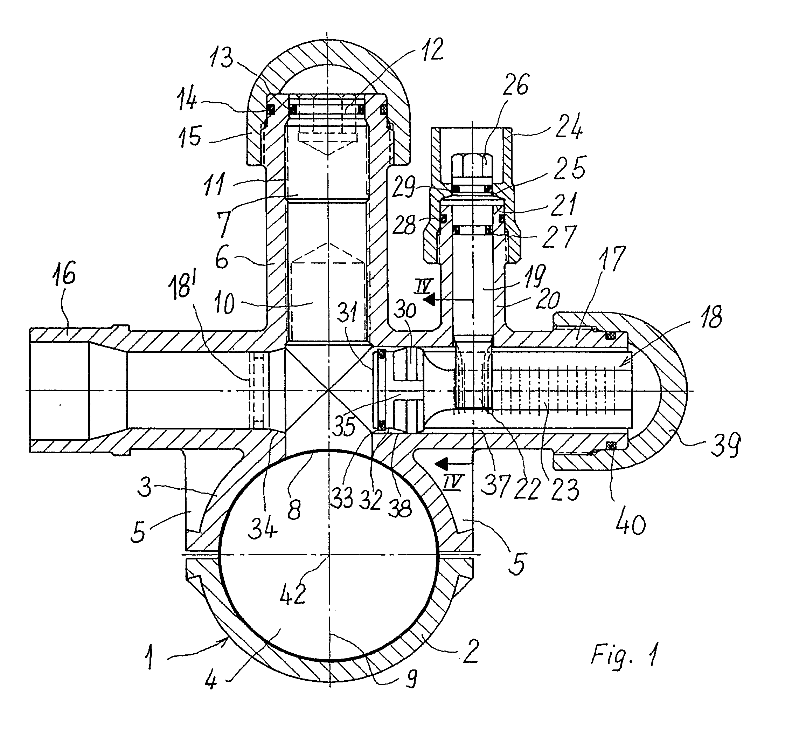

Zur Herstellung eines Hausanschlusses oder dgl. mit einer Abzweigleitung werden die beiden Halbschalen 2 und 3 in der insbesondere aus Fig. 1 ersichtlichen Weise um ein im wesentlichen waagerecht im Erdreich verlegtes Hauptrohr 4 gelegt und in an sich bekannter Weise durch eine Schweiß- oder Klebeverbindung oder auch mit Hilfe von Klemmschrauben an Hauptrohr 4 festgelegt. In einer mittleren Querebene sind Verstärkungsrippen 5 einstückig an die obere Halbschale 3 angeformt.

Die obere Halbschale 3 ist mit an diese einstückig angeformten Bauteilen als Anbohr- und Absperrarmatur ausgebildet. Hierzu besitzt die obere Halbschale 3 zunächst einen Aufnahmestutzen 6 für einen Bohrer 7 zum Ausschneiden einer Öffnung aus dem Hauptrohr 4 in dessen Scheitelbereich 8 beidseits der vertikalen Längsmittelebene 9 des Hauptrohrs 4. Der Bohrer 7 umfaßt ein Einsatzrohr 10 und besitzt ein Außengewinde 11, das mit einem entsprechenden Innengewinde am Innenumfang des Aufnahmestutzens 6 in Gewindeeingriff steht. An seinem oberen Ende ist der Bohrer 7 mit einer Eingriffsöffnung 12 zur Herstellung eines Mitnahmeeingriffs mit einem Betätigungswerkzeug zum Drehen des Bohrers versehen. Der Aufnahmestutzen 6 und mit ihm der Bohrer 7 sind mit ihrer Längsachse in der vertikalen Längsmittelebene 9 des Hauptrohrs 4 angeordnet und besitzen damit eine senkrecht auf dem Rohrscheitel 8 stehende Ausrichtung. Beim Abwärtsdrehen des Bohrers 7 mittels des in seine Eingriffsöffnung 12 eingesetzten Betätigungswerkzeugs schneidet er mit Hilfe seines Einsatzrohres 10 im Scheitelbereich 8 eine Öffnung beidseits der vertikalen Längsmittelebene 9 in das Hauptrohr 4, wobei beim Zurückdrehen des Bohrers 7 der aus der Rohrwandung zur Herstellung der Öffnung herausgeschnittene Teil der Rohrwandung als Kern unverlierbar im Einsatzrohr 10 gehalten und mitgenommen wird.

Nach der Herstellung der Öffnung im Hauptrohr 4 und dem Zurückdrehen des Bohrers 7 nimmt dieser wieder die aus Fig. 1 ersichtliche, bleibende Stellung ein und bildet dabei zugleich ein Dichtungsorgan gegenüber dem aus dem Hauptrohr 4 ausgeströmten Medium mit Hilfe einer in seinem oberen Endbereich angeordneten Umfangsdichtung 13, die mit dem Innenumfang des Aufnahmestutzens 6 in einem halsförmig verengten Endbereich in Dichtungseingriff steht. Eine weitere Abdichtung, insbesondere gegen Feuchtigkeit, ist durch einen Umfangsdichtungsring 14 geschaffen, der mit dem Innenumfang einer Verschlußkappe 15 in Dichtungseingriff steht, die bei Beendigung des Anbohrvorgangs auf das Ende des Bohrer-Aufnahmestutzens 6 zum Beispiel, wie gezeigt, aufgeschraubt wird. Statt dessen kann die Verschlußkappe 15 auch mit dem Außenumfang des Aufnahmestutzens 6 verschweißt oder verklebt werden, um einen dauerhaften, dichten Verschluß des Bohrer-Aufnahmestutzens 6 zum Erdreich hin herzustellen.

Rechtwinklig zum Bohrer-Aufnahmestutzen 6 bzw. zur vertikalen Längsmittelebene 9 des Hauptrohrs 4 ist an die obere Halbschale 3 ein Anschlußstutzen 16 angeformt, der demzufolge eine im wesentlichen waagerechte Ausrichtung entsprechend der Verlegungsebene des Hauptrohrs 4 besitzt. An den Anschlußstutzen 16 wird in nicht näher dargestellter Weise eine Abzweig- bzw. Stichleitung für einen Hausanschluß von Gas oder Wasser angeschlossen. Eine ähnliche Ausführung, wobei jedoch der Anschlußstutzen 16 parallel zum Hauptrohr 4 angeformt ist, ist ebensogut möglich.

An der oberen Halbschale 3 ist ferner ein Aufnahmestutzen 17 mit einem in diesem längsbeweglich geführten Absperrschieber 18 einstückig angeformt. Der Aufnahmestutzen 17 und mit ihm der Absperrschieber 18 besitzen eine mit dem Abzweig-Anschlußstutzen 16 fluchtende axiale Ausrichtung, so daß der Absperrschieber 18 aus seiner in Fig. 1 dargestellten Ruhestellung innerhalb des Aufnahmestutzens 17 über den Rohrscheitel 8 und die in diesem Bereich in die Wandung des Hauptrohrs 4 eingeschnittene Öffnung hinweg in eine Absperrstellung bewegt werden kann, in der er mit einem abdichtenden inneren Endbereich mit dem Innenumfang des Anschlußstutzens 16 in Dichtungseingriff steht. Diese Absperrstellung ist in Fig.

1 bei 18' in gestrichelten Linien angedeutet.

Der Absperrschieber 18 ist im Bedarfsfall von der Straßenoberseite bzw. der Straßenkappe aus in die Absperrstellung 18' und zurück bewegbar, wozu ein Betätigungsorgan in Form einer Ritzelwelle 19 vorgesehen ist, die an einem Haltestutzen 20 drehbar abgestützt ist. Der Haltestutzen 20 ist an den Schieber-Aufnahmestutzen 17 in einer zum Bohrer-Aufnahmestutzen 6 parallelen Ebene zur Straßenoberseite hin einstückig an den Aufnahmestutzen 17 in dessen Scheitelbereich angeformt und hat demzufolge, wie der Bohrer-Aufnahmestutzen 6, eine im wesentlichen senkrechte Ausrichtung.

Die Ritzelwelle 19 ist an einer Schulter 21 am oberen Stirnende des Haltestutzens 20 drehbar abgestützt und erstreckt sich mit ihrem unteren, als Ritzel 22 ausgebildeten Ende durch eine mit dem Innenkanal des Haltestutzens 20 fluchtende Öffnung im Scheitel des Aufnahmestutzens 17 hindurch, um einen Mitnahmeeingriff mit einer Zahnstange 23 herzustellen, als welche der Absperrschieber 18 über einen Teil seiner Länge ausgebildet ist, der von dem Bereich unterhalb des Haltestutzens 20 bis etwa zum äußeren Stirnende des Absperrschiebers 18 reicht.

Mittels einer den Haltestutzen 20 von oben übergreifenden Kupplungsmuffe 24 ist die Ritzelwelle 19 in axialer Richtung im Haltestutzen 20 festgelegt. Hierzu übergreift die Kupplungsmuffe 24 mit einer inneren Ringschulter 25 mit deren Unterseite eine entsprechend geformte aufwärtsweisenden Schulter der Ritzelwelle 19. Die Kupplungsmuffe 24 ist entweder, wie dargestellt, mit dem Außenumfang des Haltestutzens 20 verschraubt oder statt dessen dauerhaft verklebt oder verschweißt.

An das obere, als oberseitig offener Hohlstutzen ausgebildete Ende der Kupplungsmuffe 24 kann in nicht näher dargestellter Weise ein zur Straßenoberseite führendes Standrohr, das vorzugsweise ebenfalls aus Kunststoff besteht, angeschlossen werden. Dieses Stand- oder Schutzrohr kann vor einer Verfüllung der installierten Anbohrschelle mit Erdreich mit dem oberen Ende der Kupplungsmuffe 24 durch eine Steck-, Klebe- oder Schweißverbindung oder auf sonst geeignete Weise angeschlossen werden, um nachträglich jederzeit im Bedarfsfall einen Zugang zu der Ritzelwelle 19 zu deren Betätigung von der Straßenoberseite aus durch das Stand- oder Schutzrohr hindurch zu haben. Für diese Betätigung, d.h. Drehung, der Ritzelwelle 19 ist deren oberes Ende von einem Eingriffsglied 26, bei dem dargestellten Beispiel in Form eines Sechskants, gebildet, mit dem ein von der Straßenoberseite aus einsetzbares Drehwerkzeug (nicht dargestellt) in Verbindungseingriff gebracht werden kann.

An ihrem Außenumfang trägt die Ritzelwelle 19 einen Dichtungsring 27, der mit dem Innenumfang des Haltestutzens 20 in Dichtungseingriff steht und eine Abdichtung gegenüber dem aus dem Hauptrohr 4 austretenden Medium, beispielsweise Gas, bewirkt. Ein weiterer, äußerer Umfangsdichtungsring 28 des Haltestutzens 20, der mit dem Innenumfang der Kupplungsmuffe 24 in Dichtungseingriff steht, und ein weiterer äußerer Dichtungsring 29 der Ritzelwelle 19, der mit dem Innenumfang der Ringschulter 25 der Kupplungsmuffe 24 in Dichtungseingriff steht, bewirken in erster Linie eine Abdichtung der Innenteile gegenüber der Feuchtigkeit des Erdreichs.

Der abdichtende Endbereich des Absperrschiebers 18 umfaßt einen Führungsring 30, dessen Außendurchmesser dem Innendurchmesser des Aufnahmestutzens 17 entspricht, und einen endseitigen Stirnring 31 mit einem demgegenüber verkleinerten Außendurchmesser, so daß zwischen dem Außenumfang des Stirnrings 31 und dem Innenumfang des Aufnahmestutzens 17 ein Ringspalt 32 gebildet ist. Andererseits entspricht der Außenumfang des Stirnrings 31 dem Innendurchmesser des Abzweig-Anschlußstutzens 16, damit mit diesem ein Dichtungseingriff hergestellt werden kann, wie dies bei 18' in Fig. 1 dargestellt ist. Dabei trägt der Stirnring 31 an seinem Außenumfang einen Dichtungsring 33, der bei der Bewegung des Absperrschiebers 18 in seine Absperrstellung 18' über eine sich in den Anschlußstutzen 16 hinein verjüngende Abschrägung 34 am Stutzenanfang in einen abdichtenden Preßeingriff mit dem Innenumfang des Anschlußstutzens 16 überführt wird.

Eine Druckausgleichsöffnung zwischen der dem Anschlußstutzen 16 zugewandten Seite und der vom Anschlußstutzen 16 abgewandten Seite des Führungsrings 30 des Absperrschiebers 18 ermöglicht insoweit die Längsverschiebung des Absperrschiebers 18 in seine Schließstellung 18', ohne daß dieser Bewegung der Druck des durch die Hauptleitung 4 geförderten und aus der Öffnung im Rohrscheitel 8 austretenden Mediums entgegensteht. Diese Druckausgleichsöffnung ist durch den Ringspalt 32 und einen von einer Umfangsabflachung 35 des Führungsrings 30 mit dem Innenumfang des Aufnahmestutzens 17 gebildeten Verbindungskanal 36 geschaffen, der in einen Umfangsspalt 37 auf der der Ritzelwelle 19 zugewandten Seite des Führungsrings 30 einmündet. Die konische Schrägfläche 34 am Anfang des Abzweigstutzens 16 bildet einen Sitz für die entsprechend konische Ringfläche 38 des Führungsrings 30 in der Schließstellung 18' des Absperrschiebers 18.

Das äußere Ende des Aufnahmestutzens 17 ist von einer auf seinen Außenumfang aufgeschraubten oder mit diesem verklebten oder verschweißten Verschlußkappe 39, die, wie die Verschlußkappe 15, aus einem geeigneten Kunststoff besteht, dicht verschlossen, wobei ein Dichtungsring 40 am Außenumfang des Stutzens 17 mit dem Innenumfang der Verschlußkappe 39 in Dichtungseingriff steht.

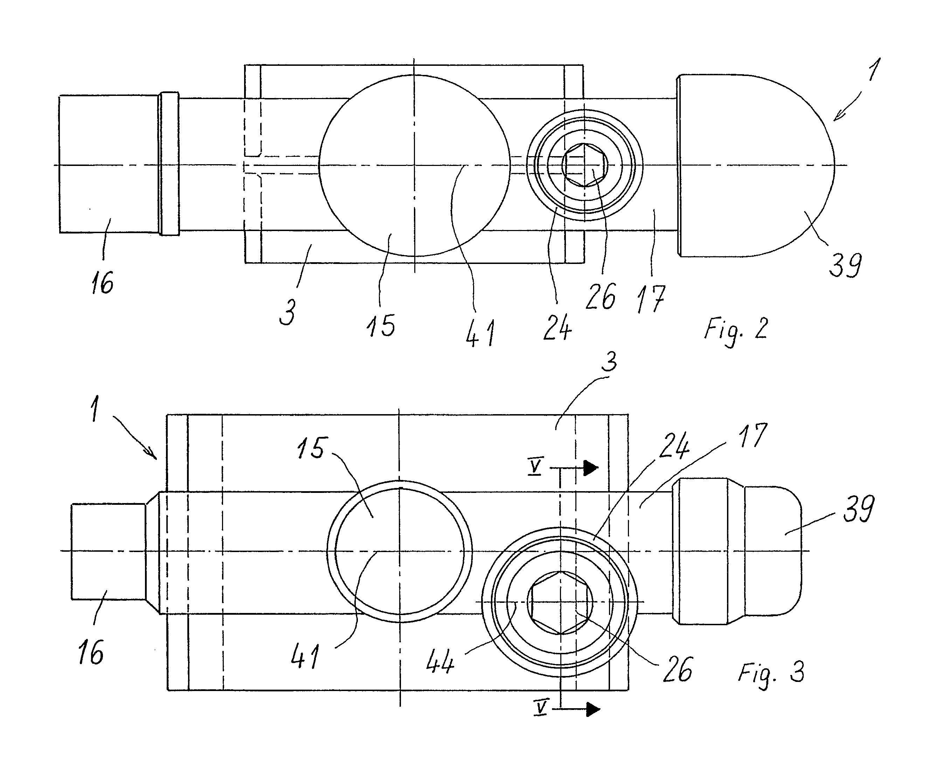

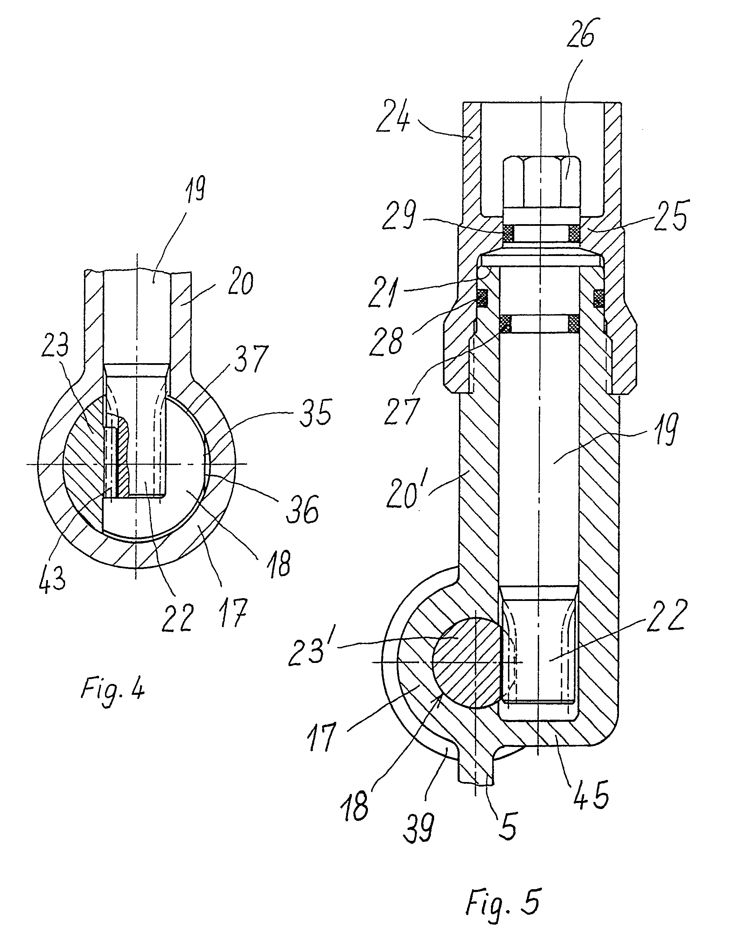

Bei dem Ausführungsbeispiel gemäß den Fig. 1, 2 und 4 ist die Zahnstange 23 des Absperrschiebers 18 im Querschnitt kreissegmentförmig ausgebildet, wobei der Durchmesser des das Kreissegment definierenden Kreises dem Innendurchmesser des Schieber-Aufnahmestutzens 17 entspricht, wie dies insbesondere aus Fig. 4 ersichtlich ist. Mit dem Außenumfangsbereich des Zahnstangensegments 23 ist der Absperrschieber 18 außerdem im Innenkanal des Stutzens 17 für seine exakte Längsverschiebung geführt. Der Haltestutzen 20 ist dabei in einer den Bohrer-Aufnahmestutzen 6 enthaltenden, gemeinsamen Querebene 41 zur Längsachse 42 des Hauptrohrs 4 angeordnet. Die Zahnstange 23 bildet an der inneren Sehnenfläche des Zahnsegments Zähne 43 aus, die sich für ihren Eingriff mit den Zähnen des Ritzels 22 der Ritzelwelle 19 über den mittleren Bereich der Sehnenfläche erstrecken.

Bei dem Ausführungsbeispiel gemäß den Fig. 3 und 5 besitzt die Zahnstange 23' im Querschnitt wenigstens nahezu die Grundform eines Vollkreisprofils, dessen Durchmesser dem Innendurchmesser des Schieber-Aufnahmestutzens für eine längsgerichtete Führung des Absperrschiebers 18 im Aufnahmestutzen 17 entspricht. Der Haltestutzen 20' ist hierbei in einer Querebene 44 zur Längsachse 42 des Hauptrohrs 4 angeordnet, die zu der vom Bohrer-Aufnahmestutzen 6 eingenommenen Querebene 41 versetzt ist. Dies ist durch eine entsprechend aus dem Scheitel des Aufnahmestutzens 17 heraus versetzte Anformung des Haltestutzens 20' an den Aufnahmestutzen 17 erreicht, wobei das untere Ende 45 des Haltestutzens 20' sacklochartig geschlossen ist und das Ritzel 22 der Ritzelwelle 19 über eine seitliche Öffnung mit der Zahnstange 23' in Eingriff steht.

Die Ausführungsform gemäß den Fig. 1, 2 und 4 ist demgegenüber formtechnisch einfacher auszuführen, hat jedoch eine etwas größere Baulänge quer zur Längsachse 42 des Hauptrohrs 4, die dadurch bedingt ist, daß zwischen dem Bohrer-Aufnahmestutzen 6 und dem Haltestutzen 20 ein bestimmter Freiraum für den Einsatz von Montagewerkzeugen eingehalten werden muß. Durch den Versatz des Haltestutzens 20' gegenüber dem Bohrer-Aufnahmestutzen 6 ist die Ausführungsform der Anbohrschelle nach den Fig. 3 und 5 formtechnisch etwas aufwendiger, es kann jedoch eine kürzere Baulänge quer zur Längsachse 42 des Hauptrohrs 4 gewählt werden, da der Versatz gleichzeitig einen Freiraum für den Einsatz von Montagewerkzeugen schafft. Die beiden Ausführungsformen können je nach den Gegebenheiten bzw. Anforderungen eingesetzt werden. Im übrigen stimmen die beiden Ausführungsformen in allen wesentlichen Punkten überein, wie dies durch die Verwendung gleicher Bezugszeichen bei beiden Ausführungsformen zur Bezeichnung gleicher bzw. übereinstimmender Bauteile zum Ausdruck gebracht ist.

## Patentansprüche

1. Anbohrschelle aus Kunststoff, deren beide Halbschalen mit einem normalerweise im wesentlichen waagerecht verlegten Hauptrohr verbindbar sind, wobei die obere Halbschale einen senkrecht zur Längsachse des Hauptrohrs ausgerichteten Aufnahmestutzen mit einem Bohrer zum Ausschneiden einer Öffnung im Hauptrohr und einen rechtwinklig zum Bohrer-Aufnahmestutzen ausgerichteten Anschlußstutzen für eine Abzweigleitung oberhalb der aus dem Hauptrohr ausgeschnittenen Öffnung umfaßt, **dadurch gekenn-zeichnet**, daß an der oberen Halbschale (3) ein weiterer Aufnahmestutzen (17) mit einem in diesem längsbeweglich geführten Absperrschieber (18) angeformt ist, der eine mit dem Abzweig-Anschlußstutzen (16) fluchtende axiale Ausrichtung besitzt und aus einer Ruhestellung innerhalb seines Aufnahmestutzens (17) mit einem abdichtenden inneren Endbereich in eine Absperrstellung (18') innerhalb des Abzweig-Anschlußstutzens (16) bewegbar ist.

2. Anbohrschelle nach Anspruch 1, dadurch gekennzeichnet, daß der Absperrschieber (18) mittels eines von der Straßenoberseite aus betätigbaren Betätigungsorgans (19) zwischen seiner Ruhe- und seiner Absperrstellung (18') längsbewegbar in seinem Aufnahmestutzen (17) abgestützt ist.

3. Anbohrschelle nach Anspruch 2, dadurch gekennzeichnet, daß sich das Betätigungsorgan (19) durch einen an den Schieber-Aufnahmestutzen (17) in einer zum Bohrer-Aufnahmestutzen (6) parallelen Ebene zur Straßenoberseite hin angeformten Haltestutzen (20) für seinen Eingriff mit dem Absperrschieber (18) hindurcherstreckt.

4. Anbohrschelle nach Anspruch 2 oder 3, dadurch gekennzeichnet, daß das Betätigungsorgan von einer drehbaren Ritzelwelle (19) gebildet und der Absperrschieber (18) bereichsweise als Zahnstange (23) für einen Mitnahmeeingriff mit einem endseitigen Ritzel (22) der Ritzelwelle (19) ausgebildet ist.

5. Anbohrschelle nach Anspruch 4, dadurch gekennzeichnet, daß die Ritzelwelle (19) an einer Schulter (21) des Haltestutzens (20) drehbar abgestützt ist.

6. Anbohrschelle nach Anspruch 5, dadurch gekennzeichnet, daß die Pitzelwelle (19) mittels einer den Haltestutzen (20) von oben übergreifenden Kupplungsmuffe (24) in axialer Richtung festgelegt ist.

7. Anbohrschelle nach Anspruch 6, dadurch gekennzeichnet, daß an das obere, von der Ritzelwelle (19) abgewandte Ende der Kupplungsmuffe (24) ein zur Straßenoberseite führendes Standrohr anschließbar ist.

8. Anbohrschelle nach einem der Ansprüche 4 bis 7, dadurch gekennzeichnet, daß das obere, dem Ritzel (22) gegenüberliegende Ende der Ritzelwelle (19) von einem Eingriffsglied (26) für eine Mitnahmeverbindung der Ritzelwelle (19) mit einem von der Straßenoberseite einsetzbaren Drehwerkzeug gebildet ist.

9. Anbohrschelle nach einem der Ansprüche 4 bis 8, dadurch gekennzeichnet, daß die Ritzelwelle (19) an ihrem Außenumfang einen Dichtungsring (27) trägt, der mit dem Innenumfang des Haltestutzens (20) in Dichtungseingriff steht.

10. Anbohrschelle nach einem der Ansprüche 1 bis 9, dadurch gekennzeichnet, daß der Endbereich des Absperrschiebers (18) einen Führungsring (30), dessen Außendurchmesser dem Innendurchmesser des Schieber-Aufnahmestutzens (17) entspricht, und einen endseitigen Stirnring (31) mit demgegenüber verkleinertem Außendurchmesser umfaßt.

11. Anbohrschelle nach Anspruch 10, dadurch gekennzeichnet, daß der Außenumfang des Stirnrings (31) dem Innendurchmesser des Abzweig-Anschlußstutzens (16) für einen Dichtungseingriff mit diesem entspricht.

12. Anbohrschelle nach Anspruch 10 oder 11, dadurch gekennzeichnet, daß der Stirnring (31) an seinem Außenumfang einen Dichtungsring (33) trägt, der bei der Bewegung des Absperrschiebers (18) in seine Absperrstellung (18') in einen abdichtenden Preßeingriff mit dem Innenumfang des Abzweig-Anschlußstutzens (16) überführbar ist.

13. Anbohrschelle nach einem der Ansprüche 1 bis 12, dadurch gekennzeichnet, daß der innere Endbereich des Absperrschiebers (18) eine Druckausgleichsöffnung für aus der Öffnung des Hauptrohrs (4) austretendes Strömungsmedium umfaßt.

14. Anbohrschelle nach einen der Ansprüche 3 bis 13, dadurch gekennzeichnet, daß das äußere Ende des Schieber-Aufnahmestutzens (18) von einer Verschlußkappe (39) dicht verschlossen ist.

15. Anbohrschelle nach einem der Ansprüche 4 bis 14, dadurch gekennzeichnet, daß die Zahnstange (23) im Querschnitt kreissegmentförmig ausgebildet ist, wobei der Durchmesser des das Kreissegment definierenden Kreises dem Innendurchmesser des Schieber- Aufnahmestutzens (17) entspricht.

16. Anbohrschelle nach Anspruch 15, dadurch gekennzeichnet, daß der Haltestutzen (20) in einer den Bohrer-Aufnahmestutzen (6) enthaltenden, gemeinsamen Querebene (41) zur Längsachse (42) des Hauptrohrs (4) angeordnet ist.

17. Anbohrschelle nach einem der Ansprüche 4 bis 14, dadurch gekennzeichnet, daß die Zahnstange (23') im Querschnitt die Grundform eines Vollkreisprofils besitzt, dessen Durchmesser dem Innendurchmesser des Schieber-Aufnahmestutzens (17) entspricht.

18. Anbohrschelle nach Anspruch 17, dadurch gekennzeichnet, daß der Haltestutzen (20') in einer Querebene (44) zur Längsachse (42) des Hauptrohrs (4) angeordnet ist, die zu der vom Bohrer-Aufnahmestutzen (6) eingenommenen Querebene (4) in Längsrichtung des Hauptrohrs (4) versetzt ist.

Fig. 1

Fig. 2

Fig. 3

Fig. 4

Fig. 5

**Europäisches Patentamt**

# EUROPÄISCHER RECHERCHENBERICHT

Nummer der Anmeldung

## EP 91 10 1964

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 216 793 (VOLGSTADT et al.)<br>* Anspruch 1; Säule 3, Linien 41-43; Figuren 2,5,6 *<br>– – – | 1-4,13 | F 16 L 47/00 |
| X,P | EP-A-0 360 312 (DRAKA POLVA BV)<br>* Anspruch 1; Figuren 1,2 *<br>– – – | 1 | |
| A | DE-C-9 615 85 (EBERSOLD & SCHRÖDER)<br>* Figuren 1-3 *<br>– – – | 1 | |
| A | DE-A-2 553 608 (HAWLE KG)<br>– – – | | |
| A | DE-B-1 063 430 (EISENGIESSEREI UND MASCH.)<br>– – – – – | | |
| | | | **RECHERCHIERTE SACHGEBIETE (Int. Cl.5)**<br><br>F 16 L |

Der vorliegende Recherchenbericht wurde für alle Patentansprüche erstellt

| Recherchenort | Abschlußdatum der Recherche | Prüfer |
|---|---|---|
| Den Haag | 23 Mai 91 | BUDTZ-OLSEN A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
---------------------------------------------------------
& : Mitglied der gleichen Patentfamilie, übereinstimmendes Dokument